# EUROPEAN PATENT SPECIFICATION

(11) **EP 3 735 053 B1**
(45) Date of publication and mention of the grant of the patent: **23.03.2022**
(21) Application number: 17935934.4
(22) Date of filing: 29.12.2017
(51) Int. Cl.: H04W 56/00, H04W 48/16, H04L 5/00

(54) **SIGNAL TRANSMISSION METHOD, TERMINAL DEVICE AND NETWORK DEVICE**
SIGNALÜBERTRAGUNGSVERFAHREN, ENDGERÄTEVORRICHTUNG UND NETZWERKVORRICHTUNG
PROCÉDÉ D'ÉMISSION DE SIGNAL, DISPOSITIF TERMINAL ET DISPOSITIF RÉSEAU

(43) Date of publication of application: 04.11.2020
(73) Proprietor: GUANGDONG OPPO MOBILE TELECOMMUNICATIONS CORP., LTD., Wusha, Chang'an Dongguan, Guangdong 523860 (CN)
(72) Inventor: TANG, Hai, Dongguan, Guangdong 523860 (CN)
(74) Representative: RGTH
(86) International application number: PCT/CN2017/120210
(87) International publication number: WO 2019/127495

(56) References cited:
- WO-A1-2018/195021
- WO-A1-2018/217471
- CN-A- 104 219 757
- CN-A- 104 734 758
- CN-A- 106 332 226
- US-A1- 2016 373 180
- ITL: "Synchronization Signal Structure", 3GPP DRAFT; R1-1701037, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170116 - 20170120 16 January 2017 (2017-01-16), XP051208552, Retrieved from the Internet: URL:http://www.3gpp.org/ftp/Meetings_3GPP_ SYNC/RAN1/Docs/ [retrieved on 2017-01-16]
- GUANGDONG OPPO MOBILE TELECOM: "Discussion on multi-beam based initial access for NR", 3GPP DRAFT; R1-1611701_DISCUSSION ON MULTI-BEAM BASED INITIAL ACCESS FOR NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CE , vol. RAN WG1, no. Reno, USA; 20161114 - 20161118 13 November 2016 (2016-11-13), XP051175671, Retrieved from the Internet: URL:http://www.3gpp.org/ftp/Meetings_3GPP_ SYNC/RAN1/Docs/ [retrieved on 2016-11-13]

## Description

### TECHNICAL FIELD

Embodiments of the disclosure relate to the field of wireless communication, and more particularly to a signal transmission method, a terminal device and a network device.

### BACKGROUND

In a 5th-Generation (5G) system, or called a New Radio (NR) system, a network device may send a Synchronous Signal Block (SS block or SSB) to a terminal device, and the SS block may include a Primary Synchronous Signal (PSS), a Secondary Synchronous Signal (SSS) and a Physical Broadcasting Channel (PBCH).

In the NR system, the network device may communicate with the terminal device through an unlicensed band.

In the NR system, how to perform transmission of an SS block in an unlicensed band is a problem urgent to be solved.

Related technologies are known from the documents "Synchronization Signal Structure, 3GPP DRAFT; R1-1701037", "Discussion on multi-beam based initial access for NR , 3GPP DRAFT; Rl-1611701". WO 2018/217471 A1 and WO 2018/195021 A1 represent prior-art falling under Article 54(3) EPC

### SUMMARY

The embodiments of the disclosure provide a signal transmission method, a terminal device and a network device, which implement transmission of an SS block in an unlicensed band.

The features of the methods and devices according to the present invention are defined in the independent claims, and the preferable features according to the present invention are defined in the dependent claims.

### BRIEF DESCRIPTION OF THE DRAWINGS

FIG. 1 is a schematic diagram of a wireless communication system according to an embodiment of the disclosure.
FIG. 2 is a schematic flowchart of SS block distribution according to an embodiment of the disclosure.
FIG. 3 is a schematic flowchart of SS block distribution according to an embodiment of the disclosure.
FIG. 4 is a schematic flowchart of a signal transmission method according to an embodiment of the disclosure.
FIG. 5(a) and FIG. 5(b) are schematic diagrams of resources for sending a beam index according to an embodiment of the disclosure.
FIG. 6(a) and FIG. 6(b) are schematic diagrams of resources for sending a beam index according to an embodiment of the disclosure.
FIG. 7(a) and FIG. 7(b) are schematic diagrams of resources for sending a beam index according to an embodiment of the disclosure.
FIG. 8(a) and FIG. 8(b) are schematic diagrams of resources for sending a beam index according to an embodiment of the disclosure.
FIG. 9 is a schematic flowchart of a signal transmission method according to another embodiment of the disclosure.
FIG. 10 is a schematic block diagram of a network device according to an embodiment of the disclosure.
FIG. 11 is a schematic block diagram of a terminal device according to an embodiment of the disclosure.
FIG. 12 is a schematic block diagram of a system chip according to an embodiment of the disclosure.
FIG. 13 is a schematic block diagram of a communication device according to an embodiment of the disclosure.

### DETAILED DESCRIPTION

The technical solutions of the embodiments of the disclosure may be applied to various communication systems, for example, a Global System of Mobile Communication (GSM), a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, LTE Time Division Duplex (TDD), a Universal Mobile Telecommunication System (UMTS), a Worldwide Interoperability for Microwave Access (WiMAX) communication system or a future 5G system.

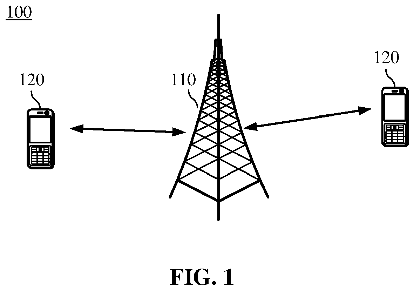

FIG. 1 illustrates a wireless communication system 100 to which the embodiments of the disclosure are applied. The wireless communication system 100 may include a network device 110. The network device 110 may be a device communicating with a terminal device. The network device 110 may provide communication coverage for a specific geographical region and may communicate with a terminal device (for example, user equipment (UE)) in the coverage. Alternatively, the network device 110 may be a Base Transceiver Station (BTS) in the GSM or the CDMA system, may also be a NodeB (NB) in the WCDMA system, and may further be an Evolutional Node B (eNB or eNodeB) in the LTE system or a wireless controller in a Cloud Radio Access Network (CRAN). Or the network device may be a relay station, an access point, a vehicle device, a wearable device, a network-side device in a future 5G network, a network device in a future evolved Public Land Mobile Network (PLMN) or the like.

The wireless communication system 100 further includes at least one terminal device 120 within the coverage of the network device 110. The terminal device 120 may be mobile or fixed. Alternatively, the terminal device 120 may refer to an access terminal, UE, a user unit, a user station, a mobile station, a mobile radio station, a remote station, a remote terminal, a mobile device, a user terminal, a terminal, a wireless communication device, a user agent or a user device. The access terminal may be a cell phone, a cordless phone, a Session Initiation Protocol (SIP) phone, a Wireless Local Loop (WLL) station, a Personal Digital Assistant (PDA), a handheld device with a wireless communication function, a computing device, another processing device connected to a wireless modem, a vehicle-mounted device, a wearable device, a terminal device in the future 5G network, a terminal device in the future evolved PLMN or the like.

In at least one embodiment, the terminal device 120 may perform Device to Device (D2D) communication.

In at least one embodiment, the 5G system or network may also be called an NR system or network.

FIG. 1 exemplarily illustrates a network device and two terminal devices. In at least one embodiment, the wireless communication system 100 may include multiple network devices and another number of terminal devices may be included in coverage of each network device. There are no limits made thereto in the embodiments of the disclosure.

In at least one embodiment, the wireless communication system 100 may further include other network entities such as a network controller and a mobility management entity. There are no limits made thereto in the embodiments of the disclosure.

It is to be understood that terms "system" and "network" in the disclosure may usually be exchanged in the disclosure. In the disclosure, the term "and/or" is only an association relationship describing associated objects and represents that three relationships may exist. For example, A and/or B may represent three conditions: i.e., independent existence of A, existence of both A and B and independent existence of B. In addition, the character "/" in the disclosure usually represents that previous and next associated objects form an "or" relationship.

An SS block is periodically transmitted. In a period for the SS block, an SS burst set of a specific frequency point may be limited in a time window of 5ms, and a maximum SS block number (i.e., candidate time positions of the SS block) is L.

For a frequency-domain range within 3GHz, L=4.

For a frequency-domain range from 3GHz to 6GHz, L=8.

For a frequency-domain range from 6GHz to 52.6GHz, L=64.

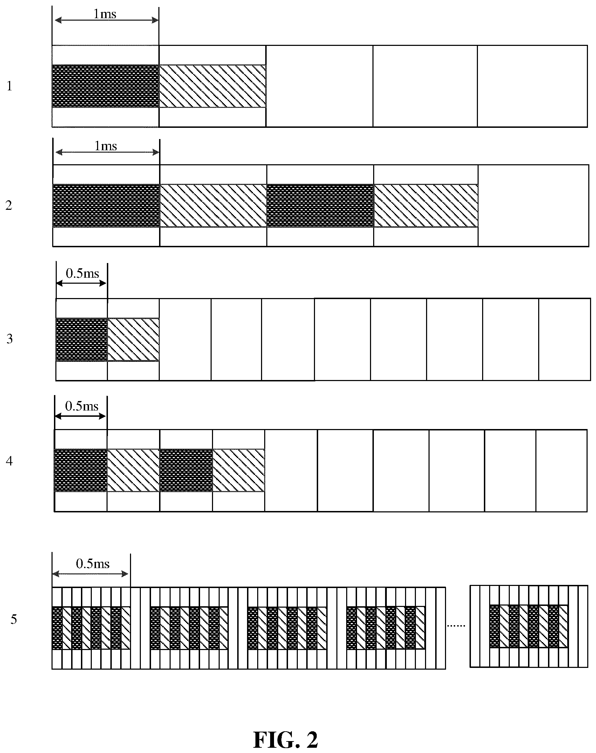

In the time window of 5ms, for different subcarrier spacings and different operating bands, slot distributions of SS blocks may be illustrated in FIG. 2, in which the block filled with each line is a slot.

The first row in FIG. 2 illustrates a slot distribution of the SS block under the condition that the subcarrier spacing is 15KHZ and L=4. The second row in FIG. 2 illustrates a slot distribution of the SS block under the condition that the subcarrier spacing is 15KHZ and L=8. The third row in FIG. 2 illustrates a slot distribution of the SS block under the condition that the subcarrier spacing is 30KHZ and L=4. The fourth row in FIG. 2 illustrates a slot distribution of the SS block under the condition that the subcarrier spacing is 30KHZ and L=8. The fifth row in FIG. 2 illustrates a slot distribution of the SS block under the condition that the subcarrier spacing is 240KHZ and L=64.

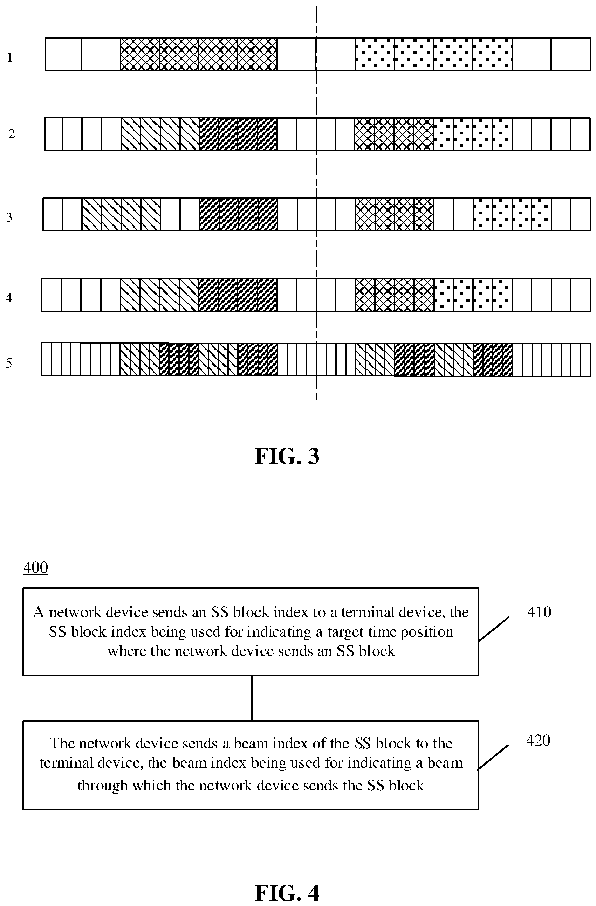

FIG. 3 illustrates pattern distributions of the SS block in a slot under subcarrier spacings of 15KHZ, 30KHZ, 120KHZ and 240KHZ. In FIG. 3, each block may represent a symbol (which may also be called a time-domain symbol, a symbol position or a time-domain symbol position, etc.), the first block in each row represents a first symbol of a slot, and 14 continuous symbols form a slot. Four continuous symbols filled with the same line may be considered as a candidate time position for the SS block.

The first row in FIG. 3 illustrates the pattern distribution of the SS block in the slot under the condition that the subcarrier spacing is 15KHZ. The second and third rows in FIG. 3 illustrate the pattern distributions of the SS block in the slot under the condition that the subcarrier spacing is 30KHZ. The fourth row in FIG. 3 illustrates the pattern distribution of the SS block in the slot under the condition that the subcarrier spacing is 120KHZ. The fifth row in FIG. 3 illustrates the pattern distribution of the SS block in the slot under the condition that the subcarrier spacing is 240KHZ.

As illustrated in FIG. 3, under the subcarrier spacings of 15KHZ and 30KHZ, at least one or two symbols for downlink control are reserved at the start of the 14 symbols, and at least two symbols for, for example, a guard interval or uplink control, are reserved at the end.

Under the subcarrier spacing of 120KHZ, at least two symbols for downlink control are reserved at the start of the 14 symbols, and at least two symbols for, for example, the guard interval or uplink control, are reserved at the end.

Under the subcarrier spacing of 240KHZ, across two continuous slots, at least four symbols for downlink control are reserved at the start of the first slot, and at least four symbols for, for example, the guard interval or uplink control, are reserved at the end of the second slot.

In a licensed band, a network device may indicate specific one or more candidate time positions, where the network device is intended to send an SS block to a terminal device, in L candidate time positions in advance to the terminal device.

In an unlicensed band, Carrier Sense Multiple Access/Collision Detection (CSMA/CD) and Carrier Sense Multiple Access/Collision Avoidance (CSMA/CA) may be adopted. A transmission node, before transmitting a wireless signal, may monitor a channel by use of a Listen Before Talk (LBT) mechanism to determine whether the channel is idle.

In the unlicensed band, if the network device needs to send a signal to the terminal device, the network device is required to monitor a carrier in the unlicensed band. During specific implementation, the network device, before monitoring, may generate a random number at first, and may send the signal if it is always monitored that the carrier is idle in a time range corresponding to the generated random number.

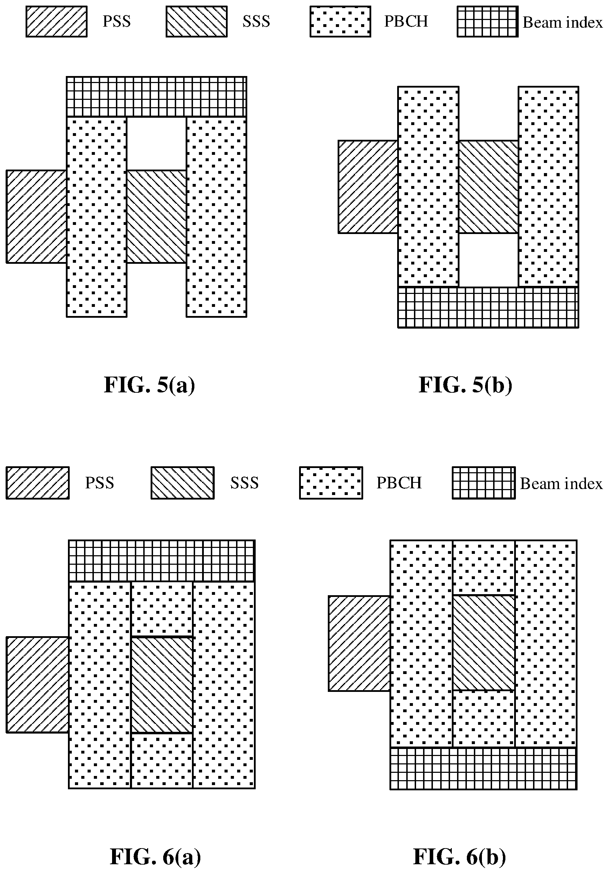

Therefore, when the SS block is sent in the unlicensed band, if the network device indicates in advance to the terminal device the specific one or more candidate time positions where the network device is intended to send the SS block to the terminal, the specific candidate time position corresponding to a specific sending beam, and if the network device does not occupy the pre-specified candidate time position, the SS block may not be sent by use of the specific sending beam, and the terminal device may not receive the SS block sent by the specific sending beam at the candidate time position pre-specified by the network device, such that the synchronization, measurement over the specific beam and the like cannot be achieved. Therefore, the embodiments of the disclosure provide a method 400 illustrated in FIG. 4 and a method 500 illustrated in FIG. 5 to solve the problems.

FIG. 4 is a schematic flowchart of a signal transmission method according to an embodiment of the disclosure. The method illustrated in FIG. 4 may be executed by a network device. The network device may be, for example, the network device 110 illustrated in FIG. 1. As illustrated in FIG. 3, the signal transmission method includes the following operations.

In 410, the network device sends an SS block index to a terminal device, the SS block index being used for indicating a target time position where the network device sends an SS block.

The network device sends the SS block index to the terminal device to enable the terminal device to receive the SS block according to the time position indicated by the SS block index and perform synchronization.

In 420, the network device sends a beam index of the SS block to the terminal device, the beam index being used for indicating a beam through which the network device sends the SS block.

Specifically, the network device, after determining the target time position for sending the SS block in multiple candidate time positions available for transmission of the SS block, still indicates the target time position for sending the SS block to the terminal device through the SS block index (or SSB index). When the SS block is sent in an unlicensed band, if the network device fails to preempt a pre-specified candidate time position, the SS block may not be sent through a specific sending beam, and thus the network device may adopt the beam index to indicate the beam for sending the SS block to the terminal device. Therefore, the terminal device may know the beam for sending the SS block according to the beam index and perform mobility measurement based on the beam.

Three manners for sending the beam index are provided in the embodiment of the disclosure, and will be described below respectively.

### First manner

In at least one embodiment, the operation in 420 that the network device sends the beam index of the SS block to the terminal device includes that: the network device sends the SS block to the terminal device at the target time position. The SS block carries the beam index.

In the embodiment, the network device carries the beam index in the SS block, and the terminal device, after receiving the SS block, may obtain the beam index.

In at least one embodiment, the SS block includes a PBCH, and the beam index is carried in an information field of the PBCH.

For example, the beam index may be carried in a payload field of the PBCH of the SS block.

Second manner discloses embodiments not covered by the claims.

In at least one embodiment, the operation in 420 that the network device sends the beam index of the SS block to the terminal device includes that: the network device sends the beam index to the terminal device in at least one of two bands adjacent to a band occupied by the SS block.

In at least one embodiment, the two bands adjacent to the band occupied by the SS block have the same bandwidth.

In at least one embodiment, the operation in 420 that the network device sends the beam index to the terminal device in the at least one of the two bands adjacent to the band occupied by the SS block includes that: the network device sends the beam index to the terminal device on at least one of time-domain symbols occupied by the SS block in the at least one of the two bands adjacent to the band occupied by the SS block.

That is, the beam index may occupy the at least one of the two adjacent bands and occupy the at least one of the time-domain symbols occupied by the SS block.

In at least one embodiment, the at least one time-domain symbol may include at least one of the following: at least one of time-domain symbols occupied by the PBCH in the SS block, a time-domain symbol occupied by a PSS in the SS block or a time-domain symbol occupied by an SSS in the SS block.

For example, as illustrated in FIG. 5(a), the SS block includes the PBCH, the PSS and the SSS. The band occupied by the beam index includes a band adjacent to a band of the SS block, and the time-domain symbols occupied by the beam index include the symbol occupied by the PBCH and the symbol occupied by the PSS. For another example, as illustrated in FIG. 5(b), the band occupied by the beam index includes another band adjacent to the band of the SS block, and the time-domain symbols occupied by the beam index include the symbol occupied by the PBCH and the symbol occupied by the PSS.

It is to be understood that relative time-frequency resource positions of the PBCH, the PSS and the SSS in FIG. 5(a) and FIG. 5(b) are only examples and time-frequency resources occupied by the PBCH, the PSS and the SSS may also be illustrated in, for example, FIG. 6(a) and FIG. 6(b).

Third manner discloses embodiments not covered by the claims.

In at least one embodiment, the operation in 420 that the network device sends the beam index of the SS block to the terminal device includes that: the network device sends the beam index to the terminal device on at least one of two time-domain symbols adjacent to a time-domain symbol occupied by the SS block.

In at least one embodiment, the operation in 420 that the network device sends the beam index to the terminal device on the at least one of the two time-domain symbols adjacent to the time-domain symbol occupied by the SS block includes that: the network device sends the beam index to the terminal device in at least one of bands occupied by the SS block on the at least one of the time-domain symbols adjacent to the time-domain symbol occupied by the SS block.

That is, the beam index may occupy at least one of the two adjacent time-domain symbols and occupy at least one of the two bands adjacent to the band occupied by the SS block.

In at least one embodiment, the at least one band includes at least one of a maximum band occupied by the PBCH in the SS block, a band occupied by the PSS in the SS block or a band occupied by the SSS in the SS block.

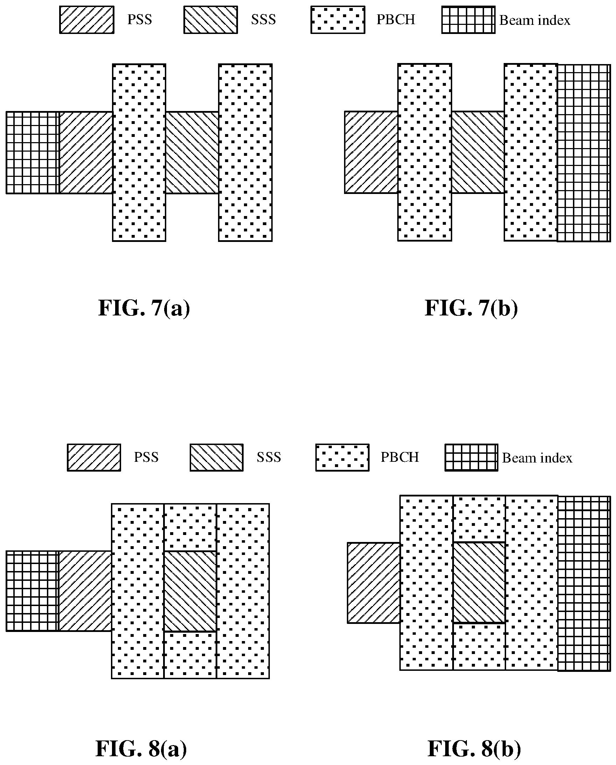

For example, as illustrated in FIG. 7(a), the SS block includes the PBCH, the PSS and the SSS. The time-domain symbol occupied by the beam index includes a time-domain symbol adjacent to the time domain of the SS block, and the band occupied by the beam index includes the band occupied by the PSS. For another example, as illustrated in FIG. 7(b), the time-domain symbol occupied by the beam index includes another time-domain symbol adjacent to the time domain of the SS block, and the band occupied by the beam index includes the maximum band occupied by the PBCH.

Relative time-frequency resource positions of the PBCH, the PSS and the SSS in FIG. 7(a) and FIG. 7(b) are only examples and time-frequency resources occupied by the PBCH, the PSS and the SSS may also be illustrated in, for example, FIG. 8(a) and FIG. 8(b).

In at least one embodiment of the disclosure, the maximum band (bandwidth) occupied by the PBCH in the SS block may be 20 Physical Resource Blocks (PRBs), the band (bandwidth) occupied by the PSS may be 12 PRBs, and the band (bandwidth) occupied by the SSS may be 12 PRBs.

For example, as illustrated in FIG. 6 and FIG. 8, in four symbols occupied by an SS block, a PSS is transmitted on the first symbol and occupies 12 PRBs, an SSS is transmitted on the third symbol and occupies 12 PRBs, and a PBCH is transmitted on the second to fourth symbols. A band occupied by the PBCH on the two symbol and the fourth symbol includes 20 PRBs, a band occupied on the third symbol includes 8 PRBs, and the 8 PRBs are symmetrically distributed at two ends of a band of the SSS. For example, for the third symbol in FIG. 8(a), in 20 PRBs, the first four PRBs transmit the PBCH, the middle 12 PRBs transmit the SSS, and the last four PRBs transmit the PBCH.

In at least one embodiment, before the operation in 410, namely before the operation that the network device sends the SS block index to the terminal device, the method further includes the following operations. The network device monitors whether a carrier in an unlicensed band is idle based on M candidate time positions for the SS block, and the network device determines the target time position in the M candidate time positions according to a monitoring result.

In at least one embodiment, the M candidate time positions are at least part of candidate time positions in L candidate time positions for the SS block, and the L candidate time positions are all candidate time positions in a single transmission period of the SS block.

M is an integer more than or equal to 1. When M is greater than 1, the M candidate time positions may be multiple continuous candidate time positions (namely, the candidate time positions are not spaced by other candidate time positions, which, however, they may be spaced by symbols not for candidate time positions). For example, under the condition that a subcarrier spacing is 15KHZ and L=4, the M candidate time positions may be two candidate time positions in a slot, or may be a second candidate time position of the first slot in two slots and a first candidate time position of the second slot.

Or, the M candidate time positions may be multiple discontinuous candidate time positions (namely, the candidate time positions may be spaced by other candidate time positions). For example, under the condition that the subcarrier spacing is 15KHZ and L=4, the M candidate time positions may include a first candidate time position of the first slot in two slots and a first candidate time position of the second slot.

In at least one embodiment, the operation that the network device monitors whether the carrier in the unlicensed band is idle based on the M candidate time positions for the SS block includes that: the network device sequentially monitors whether the carrier in the unlicensed band is idle before each of the M candidate time positions until it is monitored that the carrier in the unlicensed band is idle before N candidate time positions or until the carrier in the unlicensed band is monitored before the last candidate time position in the M candidate time positions. N is the number of candidate time positions where the network device expects to send the SS block and N is a positive integer less than or equal to M.

For example, as illustrated in FIG. 2 and FIG. 3, under the condition that the subcarrier spacing is 15KHZ and L=4, if M=2, adjacent candidate time positions are spaced by a symbol no matter whether the candidate time positions are continuous or discontinuous. Therefore, when the carrier is monitored at the M candidate time positions, the carrier may be monitored before each candidate time position according to a time sequence of the candidate time positions.

It is to be understood that, if two adjacent candidate time positions in the M candidate time positions are spaced by no symbol (for example, continuous candidate time positions in a slot in the second, fourth and fifth rows in FIG. 3) and if the SS block is sent at the first candidate time position in the two adjacent candidate time positions, the carrier is not required to be monitored at the second candidate time position. The description, mentioned in the embodiment of the disclosure, that "the network device may sequentially monitor whether the carrier in the unlicensed band is idle before each of the M candidate time positions until it is monitored that the carrier in the unlicensed band is idle before N candidate time positions or until the carrier in the unlicensed band is monitored before the last candidate time position in the M candidate time positions" is a case where universality is considered. The case that the carrier is not required to be monitored because two adjacent candidate time positions are spaced by no symbol and the SS block is sent at the first candidate time position also falls within the scope of protection of the description.

In at least one embodiment, when the carrier is monitored before each candidate time position, a first beam direction monitored by the network device is consistent with a second beam direction. The second beam direction is a sending beam direction expected to be adopted when the SS block is sent at each candidate time position.

Specifically, the network device, when monitoring the carrier before a certain candidate time position and if expecting to adopt a beam direction A to send the SS block at the candidate time position, may monitor the carrier in the beam direction A.

In at least one embodiment, when candidate time positions where the SS block is practically sent are multiple time positions including the target time position, different sending beams are adopted when the SS block is sent at any two candidate time positions in the multiple candidate time positions.

In at least one embodiment, the network device monitors that the carrier in the unlicensed band is idle before each of the at least one candidate time position.

In at least one embodiment, the network device periodically monitors the carrier in the unlicensed band according to the transmission period of the SS block at the M candidate time positions.

Correspondingly, the terminal device periodically performs signal reception on the carrier in the unlicensed band at the M candidate time positions according to the transmission period.

In at least one embodiment, the network device performs rate matching on a channel or signal other than the SS block based on such a hypothesis that the M candidate time positions are occupied by the SS block.

Correspondingly, the terminal device performs rate matching on the channel or signal other than the SS block based on such a hypothesis that the M candidate time positions are occupied by the SS block.

Specifically, since the M candidate time positions are possible positions that may be configured to send a PSS block in the unlicensed band, the network device and the terminal device, when performing rate matching in the unlicensed band, may perform rate matching on another channel or signal based on such a hypothesis that the M candidate time positions are occupied by the SS block. Therefore, correct rate matching may be achieved.

Accordingly, when the SS block is sent in an unlicensed band, the network device adopts the beam index to indicate the beam for sending the SS block to the terminal device, so that related measurement is performed according to the sending beam for the SS block indicated by the beam index. For example, each measurement period includes at least one transmission period, and the terminal device may average measurement results of SS blocks with the same sending beam in multiple transmission periods of multiple measurement periods.

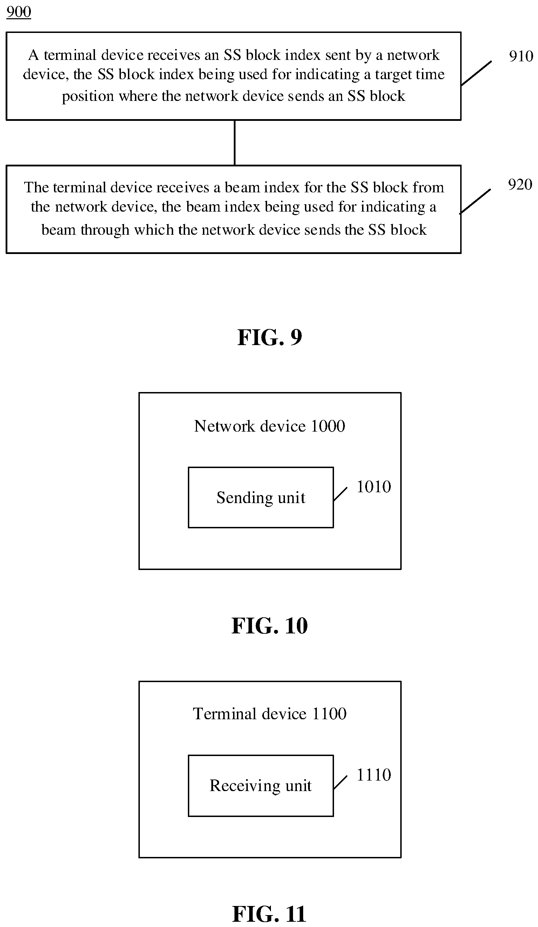

FIG. 9 is a schematic flowchart of a signal transmission method according to an embodiment of the disclosure. The method illustrated in FIG. 9 may be executed by a terminal device. The terminal device may be, for example, the terminal device 120 illustrated in FIG. 1. As illustrated in FIG. 9, the signal transmission method includes the following operations.

In 910, the terminal device receives an SS block index sent by a network device, the SS block index being used for indicating a target time position where the network device sends an SS block.

In 920, the terminal device receives a beam index of the SS block from the network device, the beam index being used for indicating a beam through which the network device sends the SS block.

The terminal device, after receiving the beam index of the SS block sent by the network device in the abovementioned manner, may perform measurement based on the sending beam, indicated by the beam index, for the SS block. For example, mobility measurement (for example, Radio Resource Management (RRM) and Radio Link Monitoring (RLM)) or beam management related measurement may be performed.

For example, each measurement period may include at least one transmission period, and the terminal device may average measurement results of SS blocks with the same sending beam in the at least one transmission period.

For another example, each measurement period may include at least one transmission period, and the terminal device may average measurement results of SS blocks with the same sending beam in multiple transmission periods of multiple measurement periods.

Accordingly, when the SS block is sent in an unlicensed band, the network device adopts the beam index to indicate the beam for sending the SS block to the terminal device, so that related measurement is performed based on the sending beam, indicated by the beam index, for the SS block. For example, each measurement period includes at least one transmission period, and the terminal device may average measurement results of SS blocks with the same sending beam in multiple transmission periods of multiple measurement periods.

In at least one embodiment, the operation that the terminal device receives the beam index of the SS block from the network device includes that: the terminal device receives the SS block sent by the network device at the target time position. The SS block carries the beam index.

In at least one embodiment, the SS block includes a PBCH, and the beam index is carried in an information field of the PBCH.

In at least one embodiment, the operation that the terminal device receives the beam index of the SS block from the network device includes that: the terminal device receives the beam index sent by the network device in at least one of two bands adjacent to a band occupied by the SS block.

In at least one embodiment, the two bands adjacent to the band occupied by the SS block have the same bandwidth.

In at least one embodiment, the operation that the terminal device receives the beam index sent by the network device in the at least one of the two bands adjacent to the band occupied by the SS block includes that: the terminal device receives the beam index sent by the network device on at least one of time-domain symbols occupied by the SS block in the at least one of the two bands adjacent to the band occupied by the SS block.

In at least one embodiment, the at least one time-domain symbol includes at least one of the following: at least one of time-domain symbols occupied by the PBCH in the SS block, a time-domain symbol occupied by a PSS in the SS block or a time-domain symbol occupied by an SSS in the SS block.

In at least one embodiment, the operation that the terminal device receives the beam index of the SS block from the network device includes that: the terminal device receives the beam index sent by the network device on at least one of two time-domain symbols adjacent to the time-domain symbol occupied by the SS block.

In at least one embodiment, the operation that the terminal device receives the beam index sent by the network device on the at least one of the two time-domain symbols adjacent to the time-domain symbol occupied by the SS block includes that: the terminal device receives the beam index sent by the network device in at least one of bands occupied by the SS block on the at least one of the time-domain symbols adjacent to the time-domain symbol occupied by the SS block.

In at least one embodiment, the at least one band includes at least one of a maximum band occupied by the PBCH in the SS block, a band occupied by the PSS in the SS block or a band occupied by the SSS in the SS block.

In at least one embodiment, the method further includes the following operations. The terminal device determines M candidate time positions for the SS block, the M candidate time positions being at least part of candidate time positions in L candidate time positions for the SS block and the L candidate time positions being all candidate time positions in a single transmission period of the SS block, and the terminal device performs signal reception on a carrier in an unlicensed band based on the M candidate time positions to acquire the SS block sent at the target time position in the M candidate time positions.

In at least one embodiment, the operation that the terminal device performs signal reception on the carrier in the unlicensed band based on the M candidate time positions includes that: the SS block is sequentially detected at each of the M candidate time positions on the carrier in the unlicensed band until the SS block is acquired at N candidate time positions or until the SS block is detected at the last candidate time position in the M candidate time positions. N is the number of candidate time positions where the network device expects to send the SS block and N is a positive integer less than or equal to M.

In at least one embodiment, the operation that the terminal device performs signal reception on the carrier in the unlicensed band based on the M candidate time positions includes that: the terminal device periodically performs signal reception on the carrier in the unlicensed band at the M candidate time positions according to the transmission period.

In at least one embodiment, the method further includes the following operation. The terminal device performs rate matching on a channel or signal other than the SS block based on such a hypothesis that the M candidate time positions are occupied by the SS block.

It is to be understood that a specific process that the terminal device receives paging of the network device may refer to related descriptions about the network device in FIG. 2, which will not be elaborated herein for simplicity.

It is also to be understood that, in each embodiment of the disclosure, a magnitude of a sequence number of each process does not mean an execution sequence and the execution sequence of each process should be determined by its function and an internal logic and should not form any limit to an implementation process of the embodiments of the disclosure.

The signal transmission method according to the embodiments of the disclosure is described above in detail and a device according to the embodiments of the disclosure will be described below in combination with FIG. 10 to FIG. 13. The technical characteristics described in the method embodiments are applied to the following device embodiments.

FIG. 10 is a schematic block diagram of a network device 1000 according to an embodiment of the disclosure. As illustrated in FIG. 10, the network device 1000 includes a sending unit 1010.

The sending unit 1010 is configured to send an SS block index to a terminal device, the SS block index being used for indicating a target time position where the network device sends an SS block; and send a beam index of the SS block to the terminal device, the beam index being used for indicating a beam through which the network device sends the SS block.

Accordingly, when the SS block is sent in an unlicensed band, the network device adopts the beam index to indicate the beam for sending the SS block to the terminal device, so that related measurement is performed based on the sending beam, indicated by the beam index, for the SS block. For example, each measurement period may include at least one transmission period, and the terminal device may average measurement results of SS blocks with the same sending beam in multiple transmission periods of multiple measurement periods.

In at least one embodiment, the sending unit 1010 is specifically configured to send the SS block to the terminal device at the target time position. The SS block carries the beam index.

In at least one embodiment, the SS block includes a PBCH, and the beam index is carried in an information field of the PBCH.

In at least one embodiment, the sending unit 1010 is specifically configured to send the beam index to the terminal device in at least one of two bands adjacent to a band occupied by the SS block.

In at least one embodiment, the two bands adjacent to the band occupied by the SS block have the same bandwidth.

In at least one embodiment, the sending unit 1010 is specifically configured to send the beam index to the terminal device on at least one of time-domain symbols occupied by the SS block in the at least one of the two bands adjacent to the band occupied by the SS block.

In at least one embodiment, the at least one time-domain symbol includes at least one of the following: at least one of time-domain symbols occupied by the PBCH in the SS block, a time-domain symbol occupied by a PSS in the SS block or a time-domain symbol occupied by an SSS in the SS block.

In at least one embodiment, the sending unit 1010 is specifically configured to send the beam index to the terminal device on at least one of two time-domain symbols adjacent to the time-domain symbol occupied by the SS block.

In at least one embodiment, the sending unit 1010 is specifically configured to send the beam index to the terminal device in at least one of bands occupied by the SS block on the at least one of the two time-domain symbols adjacent to the time-domain symbol occupied by the SS block.

In at least one embodiment, the at least one band includes at least one of a maximum band occupied by the PBCH in the SS block, a band occupied by the PSS in the SS block or a band occupied by the SSS in the SS block.

In at least one embodiment, the network device further includes a monitoring unit, configured to monitor whether a carrier in an unlicensed carrier is idle based on M candidate time positions for the SS block and determine the target time position in the M candidate time positions according to a monitoring result.

In at least one embodiment, the M candidate time positions are at least part of L candidate time positions for the SS block, and the L candidate time positions are all candidate time positions in a single transmission period of the SS block.

It is to be understood that the network device 1000 may correspond to the network device in the method 400, and may implement the operations implemented by the network device in the method 400, which will not be elaborated herein for simplicity.

FIG. 11 is a schematic block diagram of a terminal device 1100 according to an embodiment of the disclosure. As illustrated in FIG. 11, the terminal device 1100 includes a receiving unit 1110.

The receiving unit 1110 is configured to: receive an SS block index sent by a network device, the SS block index being used for indicating a target time position where the network device sends an SS block; and receive a beam index of the SS block from the network device, the beam index being used for indicating a beam through which the network device sends the SS block.

Accordingly, when the SS block is sent in an unlicensed band, the network device adopts the beam index to indicate the beam for sending the SS block to the terminal device, so that related measurement is performed according to the sending beam, indicated by the beam index, for the SS block. For example, each measurement period includes at least one transmission period, and the terminal device may average measurement results of SS blocks with the same sending beam in multiple transmission periods of multiple measurement periods.

In at least one embodiment, the receiving unit 1110 is specifically configured to receive the SS block sent by the network device at the target time position. The SS block carries the beam index.

In at least one embodiment, the SS block includes a PBCH, and the beam index is carried in an information field of the PBCH.

In at least one embodiment, the receiving unit 1110 is specifically configured to receive the beam index sent by the network device in at least one of two bands adjacent to a band occupied by the SS block.

In at least one embodiment, the two bands adjacent to the band occupied by the SS block have the same bandwidth.

In at least one embodiment, the receiving unit 1110 is specifically configured to receive the beam index sent by the network device on at least one of time-domain symbols occupied by the SS block in the at least one of the two bands adjacent to the band occupied by the SS block.

In at least one embodiment, the at least one time-domain symbol includes at least one of the following: at least one of time-domain symbols occupied by the PBCH in the SS block, a time-domain symbol occupied by a PSS in the SS block or a time-domain symbol occupied by an SSS in the SS block.

In at least one embodiment, the receiving unit 1110 is specifically configured to receive the beam index sent by the network device on at least one of two time-domain symbols adjacent to the time-domain symbol occupied by the SS block.

In at least one embodiment, the receiving unit 1110 is specifically configured to receive the beam index sent by the network device in at least one of bands occupied by the SS block on the at least one of the two time-domain symbols adjacent to the time-domain symbol occupied by the SS block.

In at least one embodiment, the at least one band includes at least one of a maximum band occupied by the PBCH in the SS block, a band occupied by the PSS in the SS block or a band occupied by the SSS in the SS block.

In at least one embodiment, the terminal device further includes a determination unit. The determination unit is configured to determine M candidate time positions for the SS block. The M candidate time positions are at least part of candidate time positions in L candidate time positions for the SS block and the L candidate time positions are all candidate time positions in a single transmission period of the SS block.

The receiving unit 1110 is further configured to perform signal reception on a carrier in an unlicensed band based on the M candidate time positions determined by the determination unit to acquire the SS block sent at the target time position in the M candidate time positions.

It is to be understood that the terminal device 1100 may correspond to the terminal device in the method 500, and may implement the operations implemented by the terminal device in the method 500, which will not be elaborated herein for simplicity.

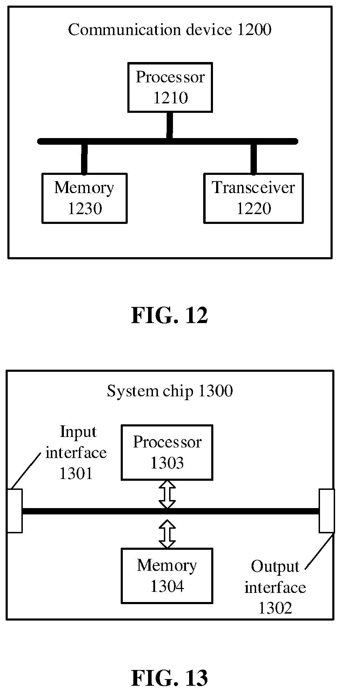

FIG. 12 is a schematic structure diagram of a communication device 1200 according to an embodiment of the disclosure. As illustrated in FIG. 12, the communication device includes a processor 1210, a transceiver 1220 and a memory 1230. The processor 1210, the transceiver 1220 and the memory 1230 communicate with one another through an internal connecting path. The memory 1230 is configured to store an instruction, and the processor 1210 is configured to execute the instruction stored in the memory 1230 to control the transceiver 1220 to receive a signal or send a signal.

In at least one embodiment, the processor 1210 may call a program code stored in the memory 1230 to execute corresponding operations, executed by a network device, in the method 400 of the method embodiment. For similarity, no more elaborations will be made herein.

In at least one embodiment, the processor 1210 may call the program code stored in the memory 1230 to execute corresponding operations, executed by a terminal device, in the method 500 of the method embodiment. For similarity, no more elaborations will be made herein.

It is to be understood that the processor in the embodiment of the disclosure may be an integrated circuit chip and has a signal processing capability. In an implementation process, each operation of the method embodiments may be completed by an integrated logical circuit of hardware in the processor or an instruction in a software form. The processor may be a universal processor, a Digital Signal Processor (DSP), an Application Specific Integrated Circuit (ASIC), a Field Programmable Gate Array (FPGA) or another programmable logical device, discrete gate or transistor logical device and discrete hardware component. Each method, operation and logical block diagram disclosed in the embodiments of the disclosure may be implemented or executed. The universal processor may be a microprocessor or the processor may also be any conventional processor and the like. The operations of the method disclosed in combination with the embodiments of the disclosure may be directly embodied to be executed and completed by a hardware decoding processor or executed and completed by a combination of hardware and software modules in the decoding processor. The software module may be located in a mature storage medium in this field such as a Random Access Memory (RAM), a flash memory, a Read-Only Memory (ROM), a Programmable ROM (PROM) or Electrically Erasable PROM (EEPROM) and a register. The storage medium is located in a memory, and the processor reads information in the memory, and completes the operations of the methods in combination with hardware.

It can be understood that the memory in the embodiment of the disclosure may be a volatile memory or a nonvolatile memory, or may include both the volatile and nonvolatile memories. The nonvolatile memory may be a ROM, a PROM, an Erasable PROM (EPROM), an EEPROM or a flash memory. The volatile memory may be a RAM, and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DR RAM). It is to be noted that the memory of a system and method described in the disclosure is intended to include, but not limited to, memories of these and any other proper types.

FIG. 13 is a schematic structure diagram of a system chip according to an embodiment of the disclosure. The system chip 1300 in FIG. 13 includes an input interface 1301, an output interface 1302, at least one processor 1303 and a memory 1304. The input interface 1301, the output interface 1302, the processor 1303 and the memory 1304 are connected with one another through an internal connecting path. The processor 1303 is configured to execute a code in the memory 1304.

In at least one embodiment, when the code is executed, the processor 1303 may implement the method 400 executed by a network device in the method embodiments. For simplicity, no more elaborations will be made herein.

In at least one embodiment, when the code is executed, the processor 1303 may implement the method 400 executed by a terminal device in the method embodiments. For simplicity, no more elaborations will be made herein.

It is to be understood that, in the embodiments of the disclosure, "B corresponding to A" represents that B is associated with A and B may be determined according to A. It is also to be understood that determining B according to A does not mean that B is determined only according to A and B may also be determined according to A and/or other information.

It is further to be understood that the term "and/or" in the disclosure is only an association relationship describing associated objects and represents that three relationships may exist. For example, A and/or B may represent three conditions: i.e., independent existence of A, existence of both A and B and independent existence of B. In addition, the character "/" in the disclosure usually represents that previous and next associated objects form an "or" relationship.

Those of ordinary skill in the art may realize that the units and algorithm steps of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the disclosure.

Those skilled in the art may clearly learn about that specific working processes of the system, device and unit described above may refer to the corresponding processes in the method embodiments and will not be elaborated herein for convenient and brief description.

In some embodiments provided by the disclosure, it is to be understood that the disclosed system, device and method may be implemented in another manner. For example, the device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the disclosure may be integrated into a monitoring unit, each unit may also physically exist independently, and two or more than two units may also be integrated into a unit.

When being realized in form of software functional unit and sold or used as an independent product, the function may also be stored in a computer-readable storage medium. Based on such an understanding, the technical solutions of the disclosure substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to execute all or part of the operations of the method in each embodiment of the disclosure. The abovementioned storage medium includes various media capable of storing program codes such as a U disk, a mobile hard disk, a ROM, a RAM, a magnetic disk or an optical disk.

The above is only the specific implementation mode of the disclosure and not intended to limit the scope of protection of the disclosure. Any variations or replacements apparent to those skilled in the art within the technical scope disclosed by the disclosure shall fall within the scope of protection of the disclosure. Therefore, the scope of protection of the disclosure shall be subject to the scope of protection of the claims. independent product, the function may also be stored in a computer-readable storage medium. Based on such an understanding, the technical solutions of the disclosure substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to execute all or part of the operations of the method in each embodiment of the disclosure. The abovementioned storage medium includes various media capable of storing program codes such as a U disk, a mobile hard disk, a ROM, a RAM, a magnetic disk or an optical disk.

The above is only the specific implementation mode of the disclosure and not intended to limit the scope of protection of the disclosure The scope of protection of the disclosure shall be subject to the scope of protection of the claims.

## Claims

1. A signal transmission method for an unlicensed band, comprising:
sending, by a network device, a synchronous signal, SS, block index to a terminal device, the SS block index being used for indicating a target time position where the network device sends an SS block (410); and
sending, by the network device, a beam index of the SS block to the terminal device, the beam index being used for indicating a beam through which the network device sends the SS block (420),
wherein sending, by the network device, the beam index of the SS block to the terminal device comprises:
sending, by the network device, the SS block to the terminal device at the target time position, wherein the SS block carries the beam index,
wherein before sending, by the network device, the SS block index to the terminal device, the method further comprises:
monitoring, by the network device based on M candidate time positions for the SS block, whether a carrier in the unlicensed band is idle; and
determining, by the network device according to a monitoring result, the target time position in the M candidate time positions.

2. The method of claim 1, wherein the SS block comprises a physical broadcasting channel, PBCH, and the beam index is carried in an information field of the PBCH.

3. The method of claim 1, wherein the M candidate time positions are at least part of L candidate time positions for the SS block, and the L candidate time positions are all candidate time positions in a single transmission period of the SS block.

4. A signal transmission method for an unlicensed band, comprising:
receiving, by a terminal device, a synchronous signal, SS, block index sent by a network device, the SS block index being used for indicating a target time position where the network device sends an SS block (910); and
receiving, by the terminal device, a beam index of the SS block from the network device, the beam index being used for indicating a beam through which the network device sends the SS block (920),
wherein receiving, by the terminal device, the beam index of the SS block from the network device comprises:
receiving, by the terminal device, the SS block sent by the network device at the target time position, wherein the SS block carries the beam index,
wherein the method further comprises:
determining, by the terminal device, M candidate time positions for the SS block, the M candidate time positions being at least part of L candidate time positions for the SS block and the L candidate time positions being all candidate time positions in a single transmission period of the SS block; and
performing, by the terminal device, signal reception on a carrier in the unlicensed band based on the M candidate time positions, to acquire the SS block sent at the target time position in the M candidate time positions.

5. The method of claim 4, wherein the SS block comprises a physical broadcasting channel, PBCH, and the beam index is carried in an information field of the PBCH.

6. A network device (1000) for an unlicensed band, comprising:
a sending unit (1010), configured to send a synchronous signal, SS, block index to a terminal device, the SS block index being used for indicating a target time position where the network device sends an SS block, wherein
the sending unit (1010) is further configured to send a beam index of the SS block to the terminal device, the beam index being used for indicating a beam through which the network device sends the SS block,
wherein the sending unit (1010) is configured to:
send the SS block to the terminal device at the target time position, wherein the SS block carries the beam index,
wherein
the network device further comprises a monitoring unit, configured to:
monitor whether a carrier in the unlicensed band is idle based on M candidate time positions for the SS block; and
determine the target time position in the M candidate time positions according to a monitoring result.

7. The network device of claim 6, wherein the SS block comprises a physical broadcasting channel, PBCH, and the beam index is carried in an information field of the PBCH.

8. The network device of claim 6, wherein the M candidate time positions are at least part of L candidate time positions for the SS block, and the L candidate time positions are all candidate time positions in a single transmission period of the SS block.

9. A terminal device (1100) for an unlicensed band, comprising:
a receiving unit (1110), configured to receive a synchronous signal, SS, block index sent by a network device, the SS block index being used for indicating a target time position where the network device sends an SS block, wherein
the receiving unit (1110) is further configured to receive a beam index of the SS block from the network device, the beam index being used for indicating a beam through which the network device sends the SS block,
wherein the receiving unit (1110) is configured to:
receive the SS block sent by the network device at the target time position, wherein the SS block carries the beam index,
wherein the terminal device further comprises a determination unit,
wherein the determination unit is configured to determine M candidate time positions for the SS block, the M candidate time positions being at least part of L candidate time positions for the SS block and the L candidate time positions being all candidate time positions in a single transmission period of the SS block; and
the receiving unit (1110) is further configured to perform signal reception on a carrier in the unlicensed band based on the M candidate time positions determined by the determination unit, to acquire the SS block sent at the target time position in the M candidate time positions.

10. The terminal device of claim 9, wherein the SS block comprises a physical broadcasting channel, PBCH, and the beam index is carried in an information field of the PBCH.

## Patentansprüche

1. Signalübertragungsverfahren für ein unlizenziertes Band, das Folgendes umfasst:
Senden, durch ein Netzwerkgerät, eines Synchronsignal-(SS)-Blockindex an ein Endgerät, wobei der SS-Blockindex zum Angeben einer Sollzeitposition verwendet wird, an der das Netzwerkgerät einen SS-Block (410) sendet; und
Senden, durch das Netzwerkgerät, eines Strahlindex des SS-Blocks an das Endgerät, wobei der Strahlindex zum Anzeigen eines Strahls verwendet wird, durch den das Netzwerkgerät den SS-Block (420) sendet,
wobei das Senden, durch das Netzwerkgerät, des Strahlindex des SS-Blocks an das Endgerät Folgendes umfasst:
Senden, durch das Netzwerkgerät, des SS-Blocks an das Endgerät an der Sollzeitposition, wobei der SS-Block den Strahlindex trägt,
wobei das Verfahren vor dem Senden des SS-Blockindex durch das Netzwerkgerät an das Endgerät ferner Folgendes umfasst:
Überwachen, durch das Netzwerkgerät, basierend auf M Kandidatenzeitpositionen für den SS-Block, ob ein Träger in dem unlizenzierten Band frei ist; und
Bestimmen, durch das Netzwerkgerät gemäß einem Überwachungsergebnis, der Sollzeitposition in den M Kandidatenzeitpositionen.

2. Verfahren nach Anspruch 1, wobei der SS-Block einen physikalischen Übertragungskanal (PBCH) umfasst und der Strahlindex in einem Informationsfeld des PBCH übertragen wird.

3. Verfahren nach Anspruch 1, wobei die M Kandidatenzeitpositionen mindestens ein Teil von L Kandidatenzeitpositionen für den SS-Block sind, und die L Kandidatenzeitpositionen alle Kandidatenzeitpositionen in einer einzigen Übertragungsperiode des SS-Blocks sind.

4. Signalübertragungsverfahren für ein unlizenziertes Band, das Folgendes umfasst:
Empfangen, durch ein Endgerät, eines Synchronsignal-(SS)-Blockindex, der von einem Netzwerkgerät gesendet wird, wobei der SS-Blockindex zum Angeben einer Sollzeitposition verwendet wird, an der das Netzwerkgerät einen SS-Block (910) sendet; und
Empfangen, durch das Endgerät, eines Strahlindex des SS-Blocks von dem Netzwerkgerät, wobei der Strahlindex zum Anzeigen eines Strahls verwendet wird, durch den das Netzwerkgerät den SS-Block (920) sendet,
wobei das Empfangen, durch das Endgerät, des Strahlindex des SS-Blocks von dem Netzwerkgerät Folgendes umfasst:
Empfangen, durch das Endgerät, des an der Sollzeitposition von dem Netzwerkgerät gesendeten SS-Blocks, wobei der SS-Block den Strahlindex trägt,
wobei das Verfahren ferner Folgendes umfasst:
Bestimmen, durch das Endgerät, von M Kandidatenzeitpositionen für den SS-Block, wobei die M Kandidatenzeitpositionen mindestens ein Teil von L Kandidatenzeitpositionen für den SS-Block sind und die L Kandidatenzeitpositionen alle Kandidatenzeitpositionen in einer einzigen Übertragungsperiode des SS-Blocks sind; und
Durchführen, durch das Endgerät, des Signalempfangs auf einem Träger im unlizenzierten Band, basierend auf den M Kandidatenzeitpositionen, um den SS-Block zu erfassen, der an der Sollzeitposition in den M Kandidatenzeitpositionen gesendet wird.

5. Verfahren nach Anspruch 4, wobei der SS-Block einen physikalischen Übertragungskanal (PBCH) umfasst und der Strahlindex in einem Informationsfeld des PBCH übertragen wird.

6. Netzwerkgerät (1000) für ein unlizenziertes Band, das Folgendes umfasst:
eine Sendeeinheit (1010), ausgebildet zum Senden eines Synchronsignal-(SS)-Blockindex an ein Endgerät, wobei der SS-Blockindex zum Anzeigen einer Sollzeitposition verwendet wird, an der das Netzwerkgerät einen SS-Block sendet,
wobei die Sendeeinheit (1010) ferner ausgebildet ist, um einen Strahlindex des SS-Blocks an das Endgerät zu senden, wobei der Strahlindex zum Anzeigen eines Strahls verwendet wird, durch den das Netzwerkgerät den SS-Block sendet,
wobei die Sendeeinheit (1010) für Folgendes ausgebildet ist:
Senden des SS-Blocks an das Endgerät an der Sollzeitposition, wobei der SS-Block den Strahlindex trägt,
wobei das Netzwerkgerät ferner eine Überwachungseinheit umfasst, die für Folgendes ausgebildet ist:
Überwachen, ob ein Träger im unlizenzierten Band frei ist, basierend auf M Kandidatenzeitpositionen für den SS-Block; und
Bestimmen der Sollzeitposition in den M Kandidatenzeitpositionen entsprechend einem Überwachungsergebnis.

7. Netzwerkgerät nach Anspruch 6, wobei der SS-Block einen physikalischen Übertragungskanal (PBCH) umfasst und der Strahlindex in einem Informationsfeld des PBCH übertragen wird.

8. Netzwerkgerät nach Anspruch 6, wobei die M Kandidatenzeitpositionen mindestens ein Teil von L Kandidatenzeitpositionen für den SS-Block sind, und die L Kandidatenzeitpositionen alle Kandidatenzeitpositionen in einer einzigen Übertragungsperiode des SS-Blocks sind.

9. Endgerät (1100) für ein unlizenziertes Band, das Folgendes umfasst:
eine Empfangseinheit (1110), ausgebildet zum Empfangen eines Synchronsignal-(SS)-Blockindex, gesendet von einem Netzwerkgerät, wobei der SS-Blockindex zum Anzeigen einer Sollzeitposition verwendet wird, an der das Netzwerkgerät einen SS-Block sendet,
wobei die Empfangseinheit (1110) ferner dazu ausgebildet ist, einen Strahlindex des SS-Blocks von dem Netzwerkgerät zu empfangen, wobei der Strahlindex zum Anzeigen eines Strahls verwendet wird, durch den das Netzwerkgerät den SS-Block sendet,
wobei die Empfangseinheit (1110) für Folgendes ausgebildet ist:
Empfangen des an der Sollzeitposition von dem Netzwerkgerät gesendeten SS-Blocks, wobei der SS-Block den Strahlindex trägt,
wobei das Endgerät ferner eine Bestimmungseinheit umfasst,
wobei die Bestimmungseinheit dazu ausgebildet ist, M Kandidatenzeitpositionen für den SS-Block zu bestimmen, wobei die M Kandidatenzeitpositionen mindestens ein Teil von L Kandidatenzeitpositionen für den SS-Block sind und die L Kandidatenzeitpositionen alle Kandidatenzeitpositionen in einer einzigen Übertragungsperiode des SS-Blocks sind; und
die Empfangseinheit (1110) ferner dazu ausgebildet ist, einen Signalempfang auf einem Träger in dem unlizenzierten Band auf der Basis der von der Bestimmungseinheit bestimmten M Kandidatenzeitpositionen durchzuführen, um den an der Sollzeitposition gesendeten SS-Block in den M Kandidatenzeitpositionen zu erfassen.

10. Endgerät nach Anspruch 9, wobei der SS-Block einen physikalischen Übertragungskanal (PBCH) umfasst und der Strahlindex in einem Informationsfeld des PBCH übertragen wird.

## Revendications

1. Procédé de transmission de signal destiné à une bande sans licence, comprenant :
l'envoi, par un dispositif de réseau, d'un indice de bloc de signal synchrone, SS, à un dispositif terminal, l'indice de bloc SS étant utilisé pour indiquer une position temporelle cible où le dispositif de réseau envoie un bloc SS (410) ; et
l'envoi, par le dispositif de réseau, d'un indice de faisceau du bloc SS au dispositif terminal, l'indice de faisceau étant utilisé pour indiquer un faisceau à travers lequel le dispositif de réseau envoie le bloc SS (420) ;
dans lequel l'envoi, par le dispositif de réseau, de l'indice de faisceau du bloc SS au dispositif terminal comprend :
l'envoi, par le dispositif de réseau, du bloc SS au dispositif terminal au niveau de la position temporelle cible, le bloc SS acheminant l'indice de faisceau ;
dans lequel avant l'envoi, par le dispositif de réseau, de l'indice de bloc SS au dispositif terminal, le procédé comprend en outre :
la surveillance, par le dispositif de réseau sur la base des M positions temporelles candidates pour le bloc SS, pour savoir si une porteuse dans la bande sans licence est inactive ; et
la détermination, par le dispositif de réseau en fonction d'un résultat de surveillance, de la position temporelle cible dans les M positions temporelles candidates.

2. Procédé selon la revendication 1, dans lequel le bloc SS comprend un canal de radiodiffusion physique, PBCH, et l'indice de faisceau est acheminé dans un champ d'informations du PBCH.

3. Procédé selon la revendication 1, dans lequel les M positions temporelles candidates sont au moins une partie des L positions temporelles candidates pour le bloc SS, et les L positions temporelles candidates sont toutes des positions temporelles candidates dans une seule période de transmission du bloc SS.

4. Procédé de transmission de signal destiné à une bande sans licence, comprenant :
la réception, par un dispositif terminal, d'un indice de bloc de signal synchrone, SS, envoyé par un dispositif de réseau, l'indice de bloc SS étant utilisé pour indiquer une position temporelle cible où le dispositif de réseau envoie un bloc SS (910) ; et
la réception, par le dispositif terminal, d'un indice de faisceau du bloc SS provenant du dispositif de réseau, l'indice de faisceau étant utilisé pour indiquer un faisceau à travers lequel le dispositif de réseau envoie le bloc SS (920) ;
dans lequel la réception, par le dispositif terminal, de l'indice de faisceau du bloc SS à partir de l'indice de réseau comprend :
la réception, par le dispositif terminal, du bloc SS envoyé par le dispositif de réseau au niveau de la position temporelle cible, le bloc SS acheminant l'indice de faisceau ;
dans lequel le procédé comprend en outre :
la détermination, par le dispositif terminal, de M positions temporelles candidates pour le bloc SS, les M positions temporelles candidates étant au moins une partie des L positions temporelles candidates pour le bloc SS et les L positions temporelles candidates étant toutes des positions temporelles candidates dans une seule période de transmission du bloc SS ; et
l'exécution, par le dispositif terminal, d'une réception de signal sur une porteuse dans la bande sans licence sur la base des M positions temporelles candidates, pour acquérir le bloc SS envoyé au niveau de la position temporelle cible dans les M positions temporelles candidates.

5. Procédé selon la revendication 4, dans lequel le bloc SS comprend un canal de radiodiffusion physique, PBCH, et l'indice de faisceau est acheminé dans un champ d'informations du PBCH.

6. Dispositif de réseau (1000) destiné à une bande sans licence, comprenant :
une unité d'envoi (1010), configurée pour envoyer un indice de bloc de signal synchrone, SS, à un dispositif terminal, l'indice de bloc SS étant utilisé pour indiquer une position temporelle cible où le dispositif de réseau envoie un bloc SS, dans lequel
l'unité d'envoi (1010) est configurée en outre pour envoyer un indice de faisceau du bloc SS au dispositif terminal, l'indice de faisceau étant utilisé pour indiquer un faisceau à travers lequel le dispositif de réseau envoie le bloc SS ;
dans lequel l'unité d'envoi (1010) est configurée pour :
envoyer le bloc SS au dispositif terminal au niveau de la position temporelle cible, le bloc SS acheminant l'indice de faisceau ;
dans lequel le dispositif de réseau comprend en outre une unité de surveillance, configurée pour :
surveiller si une porteuse dans la bande sans licence est inactive sur la base des M positions temporelles candidates pour le bloc SS ; et
déterminer la position temporelle cible dans les M positions temporelles candidates en fonction d'un résultat de surveillance.

7. Dispositif de réseau selon la revendication 6, dans lequel le bloc SS comprend un canal de radiodiffusion physique, PBCH, et l'indice de faisceau est acheminé dans un champ d'informations du PBCH.

8. Dispositif de réseau selon la revendication 6, dans lequel les M positions temporelles candidates sont au moins une partie des L positions temporelles candidates pour le bloc SS, et les L positions temporelles candidates sont toutes des positions temporelles candidates dans une seule période de transmission du bloc SS.

9. Dispositif terminal (1100) destiné à une bande sans licence, comprenant :
une unité de réception (1110), configurée pour recevoir un indice de bloc de signal synchrone, SS, envoyé par un dispositif de réseau, l'indice de bloc SS étant utilisé pour indiquer une position temporelle cible où le dispositif de réseau envoie un bloc SS, dans lequel
l'unité de réception (1110) est configurée en outre pour recevoir un indice de faisceau du bloc SS provenant du dispositif de réseau, l'indice de faisceau étant utilisé pour indiquer un faisceau à travers lequel le dispositif de réseau envoie le bloc SS ;
dans lequel l'unité de réception (1110) est configurée pour :
recevoir le bloc SS envoyé par le dispositif de réseau au niveau de la position temporelle cible, le bloc SS acheminant l'indice de faisceau ;
dans lequel le dispositif terminal comprend en outre une unité de détermination, l'unité de détermination étant configurée pour déterminer M positions temporelles candidates pour le bloc SS, les M positions temporelles candidates étant au moins une partie des L positions temporelles candidates pour le bloc SS et les L positions temporelles candidates étant toutes des positions temporelles candidates dans une seule période de transmission du bloc SS ; et
l'unité de réception (1110) est configurée en outre pour exécuter une réception de signal sur une porteuse dans la bande sans licence sur la base des M positions temporelles candidates déterminées par l'unité de détermination, pour acquérir le bloc SS envoyé au niveau de la position temporelle cible dans les M positions temporelles candidates.

10. Dispositif terminal selon la revendication 9, dans lequel le bloc SS comprend un canal de radiodiffusion physique, PBCH, et l'indice de faisceau est acheminé dans un champ d'informations du PBCH.
